# FASCICULE DE BREVET EUROPEEN

(11) **EP 1 305 197 B1**
(45) Date de publication et mention de la délivrance du brevet: **02.01.2008**
(21) Numéro de dépôt: 01955409.6
(22) Date de dépôt: 12.07.2001
(51) Int. Cl.: B60T 13/575

(54) **SERVOMOTEUR POUR FREINAGE D'URGENCE COMPORTANT DES MOYENS D'INSONORISATION.**
BREMSKRAFTVERSTÄRKER FÜR EINE NOTBREMSHILFE MIT SCHALLDÄMMUNGSMITTEL
EMERGENCY BRAKING BRAKE BOOSTER COMPRISING SOUNDPROOFING MEANS

(30) Priorité: 25.07.2000 FR 0009753
(43) Date de publication de la demande: 02.05.2003
(73) Titulaire: BOSCH SISTEMAS DE FRENADO, S.L., 08080 Barcelona 6 (ES)
(72) Inventeur: SIMON BACARDIT, Joan, 08013 Barcelona (ES); SACRISTAN, Fernando, 08003 Barcelona (ES); BERTHOMIEU, Bruno, 08003 Barcelona (ES)
(74) Mandataire: Hurwic, Aleksander Wiktor
(86) Numéro de dépôt international: PCT/FR2001/002255
(87) Numéro de publication internationale: WO 2002/008038

(56) Documents cités:
- DE-A- 19 519 874
- DE-A- 19 750 514
- DE-A- 19 755 442
- US-A- 5 943 938

## Description

L'invention concerne un servomoteur pneumatique d'assistance au freinage pour un véhicule automobile.

L'invention concerne plus particulièrement un servomoteur pneumatique d'assistance au freinage pour un véhicule automobile, du type qui comporte une enveloppe rigide à l'intérieur de laquelle est mobile une cloison transversale délimitant de façon étanche une chambre avant soumise à une première pression de dépression moteur, et une chambre arrière soumise à une deuxième pression variant entre la dépression moteur et la pression atmosphérique, du type qui comporte un piston mobile solidaire de la cloison mobile se déplaçant avec la cloison mobile et une tige de commande se déplaçant dans le piston sélectivement en fonction d'un effort axial d'entrée exercé vers l'avant à l'encontre d'un effort de rappel exercé sur la tige par un ressort de rappel, du type dans lequel la tige est mobile suivant une position d'actionnement intermédiaire ou une position d'actionnement extrême obtenue lorsque l'effort d'entrée est appliqué à une vitesse élevée déterminée, du type qui comporte un plongeur qui est agencé à l'avant de la tige de commande dans le piston et un clapet à trois voies qui comporte au moins un siège annulaire arrière du plongeur et qui est susceptible de faire varier la deuxième pression régnant dans la chambre arrière, notamment en mettant en communication la chambre avant et la chambre arrière lorsque la tige de commande est en position de repos ou en mettant progressivement la chambre arrière en communication avec la pression atmosphérique lorsque la tige de commande est actionnée, du type dans lequel, dans la position extrême d'actionnement de la tige de commande, un palpeur monté coulissant à l'extrémité avant du plongeur est sollicité par le plongeur au contact d'un disque de réaction solidaire du piston mobile pour transmettre au plongeur et à la tige de commande l'effort de réaction du piston mobile, et du type qui comporte un dispositif d'embrayage unidirectionnel qui comporte une douille coaxiale qui coulisse sur le plongeur, et des moyens de blocage axial qui sont susceptibles de la bloquer dans une position axiale avant extrême dans laquelle une portée annulaire d'extrémité avant de la douille bloque le palpeur indépendamment du plongeur et de la tige de commande.

De manière connue, une telle conception présente des avantages considérables en terme de sécurité lors d'une situation de freinage d'urgence. Le document DE 19750514 A1 décrit un servomoteur penumatique couventionel.

En effet, un servomoteur conventionnel ne comporte ni palpeur, ni dispositif d'embrayage unidirectionnel du palpeur. Le plongeur est susceptible de venir solliciter directement le disque de réaction solidaire de la face arrière du piston mobile.

Dans une situation de freinage extrême pour laquelle un effort de freinage maximal est exercé sur la tige de commande, l'actionnement de la tige du commande provoque l'actionnement du plongeur formant aussi palpeur, ce qui provoque l'ouverture maximale du clapet à trois voies de manière que la chambre arrière soit mise à la pression atmosphérique. II s'ensuit un déplacement vers l'avant de la cloison mobile et l'extrémité du plongeur vient au contact du disque de réaction solidaire de la face arrière du piston mobile.

Ainsi, l'effort exercé sur le piston mobile lorsque la tige de commande est en fin de course résulte de l'effort d'assistance qui est provoqué par la différence de pression de chaque côté de la paroi mobile et de l'effort exercé par le plongeur formant palpeur sur ledit piston mobile. Le conducteur du véhicule ressent par ailleurs l'effort de réaction du freinage, qui est transmis du piston mobile au plongeur par l'intermédiaire du disque de réaction.

Or, on a constaté que bon nombre de conducteurs, confrontés à une situation de freinage d'urgence, sous-estimaient les risques encourus, et que, après avoir freiné brutalement, ils relâchaient leur effort de freinage alors que le maintien d'un effort de freinage était indispensable pour éviter un accident.

En effet, dans le cas d'une situation de freinage extrême accompagnée d'un déplacement rapide de la tige de commande, le plongeur peut venir au contact du disque de réaction et transmettre au conducteur une sensation de freinage maximal avant même que la différence de pression ne soit maximale entre les chambres de pression avant et arrière, ce qui peut conduire le conducteur à relâcher son effort quand bien même il devrait être maintenu pour bénéficier de l'effort de freinage maximal.

Un servomoteur tel que celui du type décrit précédemment permet de remédier à cet inconvénient.

En effet, un tel servomoteur comportant une douille coulissant sur le palpeur permet, lorsque les moyens de blocage axial de la douille immobilisent axialement celle-ci, de bloquer le palpeur au contact du disque de réaction à l'aide la douille et donc de maintenir un effort maximal sur la face arrière du piston mobile quand bien même le conducteur aurait partiellement relâché son effort.

Or dans un tel servomoteur, la douille est rappelée élastiquement vers l'arrière au contact du plongeur par l'intermédiaire d'un ressort qui est interposé entre le piston mobile et la douille.

De ce fait, lorsque le conducteur relâche son effort sur la pédale de frein, les moyens de blocage axial de la douille se trouvent eux aussi relâchés, et la douille se trouve alors ramenée violemment en arrière en butée contre une face d'épaulement du plongeur, ce qui provoque un bruit qui est particulièrement désagréable pour les occupants du véhicule.

Pour remédier à cet inconvénient, l'invention propose des moyens d'insonorisation du retour de la douille.

Dans ce but, l'invention propose un servomoteur du type décrit précédemment, caractérisé en ce que l'embrayage unidirectionnel comporte des moyens élastomères d'amortissement qui sont interposés entre une face intermédiaire transversale de butée du plongeur et une face transversale en regard de la douille pour permettre, une fois que l'effort d'entrée a été relâché et que les moyens de blocage ont déverrouillé la douille, un retour silencieux de la douille vers sa position arrière de repos.

Selon d'autres caractéristiques de l'invention:
- la douille est tubulaire, d'un diamètre intérieur correspondant à un diamètre d'une partie avant du plongeur, et la face transversale en regard de la douille est constituée de la face arrière annulaire de la douille,
- la face intermédiaire de butée du plongeur est constituée d'une face avant annulaire transversale qui est portée par une partie arrière du plongeur formant épaulement, dont une face arrière de ladite partie arrière portant le siège annulaire arrière du clapet,
- les moyens élastomères d'amortissement comportent un joint annulaire qui est fixé sur la face avant annulaire de l'épaulement du plongeur,
- le joint annulaire comporte au moins une partie annulaire arrière et une partie tronconique avant formant lèvre, de conicité orientée vers l'arrière, qui est destinée à freiner la douille lors de son retour en position de repos avant qu'elle ne soit reçue en appui contre la partie annulaire arrière,
- une face arrière de la partie annulaire du joint est collée à la face avant annulaire de l'épaulement du plongeur,
- les moyens de blocage axial de la douille comportent une clé sensiblement annulaire qui entoure avec jeu la douille et qui est susceptible, lorsque l'effort d'entrée est appliqué à la vitesse déterminée, d'être entraînée par le piston mobile pour basculer autour d'un axe globalement transversal pour coopérer avec la périphérie de la douille et l'immobiliser,
- la clé comporte au moins une branche d'orientation sensiblement radiale qui est traversée par la douille et qui porte des moyens de blocage destinés à coopérer avec la périphérie de la douille pour son blocage,
- la clé est montée dans un évidement qui traverse le piston perpendiculairement par rapport à son axe et dans lequel elle est susceptible de basculer dans sa position de blocage de la douille, et en ce qu'elle est rappelée élastiquement par un ressort de compression agencé entre la paroi transversale avant de l'évidement et une face avant d'une partie supérieure de sa branche vers sa position de repos dans laquelle sa branche est en appui, dans sa partite supérieure, sur la paroi transversale arrière de l'évidement, et, dans sa partie inférieure opposée, sur un support fixe solidaire de l'enveloppe du servomoteur.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'ensemble d'un servomoteur pneumatique d'assistance au freinage réalisé conformément à un état antérieur de la technique ;
- la figure 2 est une vue de détail en coupe axiale d'un servomoteur réalisé conformément à l'invention, les moyens de blocage axial de la douille étant représentés en position de repos ;
- la figure 3 est une vue de détail en coupe axiale du servomoteur de la figure 2, les moyens de blocage axial étant représentés en position de blocage de la douille ;
- la figure 4 est une vue de détail en coupe axiale du servomoteur de la figure 2 illustrant le retour et l'amortissement de la douille ; et
- la figure 5 est une vue de détail en coupe du joint.

Dans la description qui va suivre, des chiffres de référence identiques désignent des pièces identiques ou ayant des fonctions similaires.

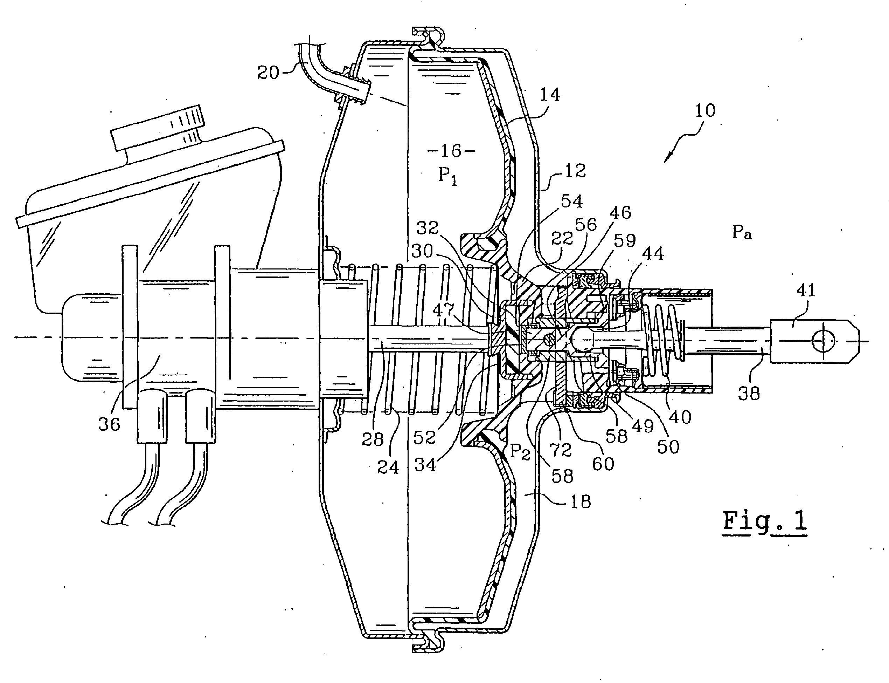

Par convention, les termes "avant", "arrière", supérieur", "inférieur" désignent respectivement des éléments ou des positions orientés respectivement vers la gauche, la droite, le haut, ou le bas des figures 1 à 4.

On a représenté à la figure 1 l'ensemble d'un servomoteur 10 pneumatique d'assistance au freinage pour un véhicule automobile.

De manière connue, le servomoteur pneumatique 10 comporte une enveloppe rigide 12 à l'intérieur de laquelle est montée mobile une cloison 14 transversale qui délimite de façon étanche une chambre avant 16, soumise à une première pression "P₁" dont la valeur est égale à la valeur de la dépression du moteur du véhicule, et une chambre arrière 18 soumise à une deuxième pression "P₂". La deuxième pression "P₂" est susceptible, comme il sera décrit ultérieurement, de varier entre la valeur de dépression moteur "P₁" et la valeur de la pression atmosphérique "Pₐ".

La chambre avant 16 est alimentée en pression "P₁" par l'intermédiaire d'un conduit 20 de dépression qui est relié à une source de dépression du véhicule, par exemple une dépression régnant dans un collecteur d'admission (non représenté) d'un moteur du véhicule ou une pompe à vide.

Le servomoteur pneumatique 10 comporte un piston mobile 22 qui est solidaire de la cloison mobile 14. A l'intérieur de l'enveloppe 12, la cloison mobile 14 est rappelée élastiquement vers l'arrière par un ressort 24 de rappel qui prend appui sur l'enveloppe 12 et sur une face avant 26 du piston mobile 22. La face avant 26 du piston mobile 22 porte une coupelle 30 de réaction à l'intérieur de laquelle est agencée, comme on le verra plus loin, un disque de réaction 32 en matériau élastomère. Une face avant 34 de la coupelle 30 de réaction est solidaire d'une tige d'actionnement 28, qui est par conséquent est solidaire des déplacements du piston mobile 22, et qui permet l'actionnement d'un maître-cylindre 36 hydraulique de freinage du véhicule.

Une tige 38 de commande, qui est par exemple reliée à une pédale de frein du véhicule par l'intermédiaire d'un manchon 41 d'accouplement qui est agencé à son extrémité libre arrière, est susceptible de se déplacer dans le piston mobile 22, sélectivement en fonction d'un effort axial d'entrée exercé vers l'avant sur la tige 38 de commande. L'effort d'actionnement est exercé à l'encontre d'un effort de rappel qui est exercé sur la tige 38 par un ressort de rappel 40 qui est interposé entre le piston mobile 22 et la tige 38 de commande.

L'autre extrémité avant de la tige 38 de commande est conformée en rotule 42 et est reçue dans un logement complémentaire 44 d'un plongeur 46 sensiblement cylindrique qui est monté coulissant dans le piston mobile 22. Plus particulièrement, le logement 44 est agencé dans une partie arrière 49 du plongeur 46 conformée en épaulement.

Un siège annulaire arrière 48 du plongeur 46, agencé à l'extrémité de la partie arrière 49 du plongeur 46, fait partie d'un clapet 50 à trois voies qui est susceptible de faire varier la deuxième pression "P₂"'régnant dans la chambre arrière 18, notamment en mettant en communication la chambre avant 16 et la chambre arrière 18 lorsque la tige 38 de commande est en position de repos, ou en mettant progressivement la chambre arrière 18 en communication avec la pression atmosphérique "Pₐ" lorsque la tige 38 de commande est actionnée.

Le fonctionnement du clapet à trois voies 50 étant connu de l'état de la technique, il ne sera pas décrit plus explicitement dans la présente description.

De manière connue, un palpeur 52 est monté coulissant à la fois sur une extrémité avant d'une partie avant 47, opposée à la partie arrière 49, du plongeur 46, et à l'intérieur d'un alésage 54 du piston mobile 22 qui débouche en regard de la coupelle de réaction 30. De la sorte, le palpeur 52 est susceptible d'être sollicité par le plongeur 46 pour solliciter à son tour le disque 32 de réaction et le comprimer, ce qui permet ainsi de transmettre au plongeur 46 et, ce faisant, à la tige de commande 38, l'effort de réaction du piston mobile 26 dans une position d'actionnement extrême de fin de course de la tige de commande 38.

De manière connue, le servomoteur 10 comporte un dispositif d'embrayage unidirectionnel qui comporte d'une part une douille 58 coaxiale et d'autre part des moyens de blocage axial de la douille 58.

La douille 58 coulisse sur la partie avant 47 du plongeur 46 et elle est rappelée élastiquement par l'intermédiaire d'un ressort 56, interposé entre le piston 22 et la douille 58, au contact avec une face intermédiaire de butée du plongeur 46, et plus particulièrement au contact avec une face avant annulaire transversale 59 de la partie arrière 49 du plongeur 46 qui forme épaulement.

Les moyens de blocage axial de la douille 58, quant à eux, sont susceptibles, lorsqu'un effort d'entrée est appliqué d'arrière en avant suivant une course extrême de la tige de commande 38, et notamment à une vitesse déterminée de celle-ci, de bloquer axialement le coulissement de la douille 58 sur la partie avant 47 du plongeur 46, et ce faisant de bloquer la palpeur 52 dans une position avant extrême de sollicitation du disque de réaction 32.

Si le conducteur relâche prématurément son effort sur la tige 38, la douille 58 est bloquée par les moyens de blocage axial dans une position axiale avant extrême dans laquelle elle bloque le palpeur 52 indépendamment du plongeur 46 et de la tige de commande 38, ce qui permet de maintenir un effort de freinage maximal tant que le retour de la tige 38 de commande n'a pas provoqué la réouverture du clapet à trois voies 50, et ainsi, le retour du piston 22 d'avant en arrière.

Le détail du fonctionnement de l'embrayage unidirectionnel sera décrit plus précisément en référence aux figures suivantes qui représentent un servomoteur 10 objet de l'invention fonctionnant suivant le même principe.

Dans la conception représentée à la figure 1, le dispositif d'embrayage unidirectionnel présente l'inconvénient de ne pas comporter de moyens d'amortissement de la douille 58.

En effet, lorsque le conducteur relâche brutalement et totalement l'effort qu'il exerce sur la tige de commande 38, les moyens de blocage axial de le douille 58 se déverrouillent instantanément et libèrent la douille 58 de sa position avant extrême. La douille 58 se trouve alors rappelée brutalement par le ressort de rappel 56 contre la face avant annulaire transversale 59 de la partie arrière 49 du plongeur 46, ce qui provoque un bruit qui est nuisible au confort auditif des passagers du véhicule équipé d'un tel servomoteur 10.

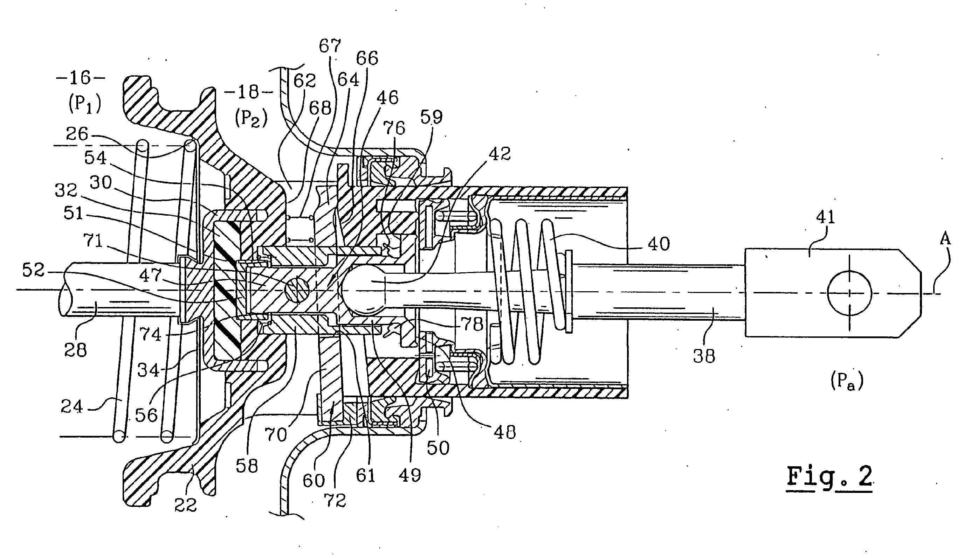

Pour remédier à cet inconvénient, l'invention propose un servomoteur 10 du type de celui qui est décrit aux figures 2 à 4.

De manière connue, comme l'illustrent les figures 2 à 4, le servomoteur 10 comporte un dispositif d'embrayage unidirectionnel qui peut comporter, à titre d'exemple et de façon non limitative de l'invention, d'une part la douille 58 coaxiale qui coulisse sur la partie avant 47 du plongeur 46 et qui est rappelée élastiquement vers l'arrière par l'intermédiaire du ressort 56, et qui peut comporter d'autre part les moyens de blocage axial qui sont constitués d'une clé 60 sensiblement annulaire qui entoure avec jeu radial la douille 58. A cet effet, le ressort 56 est interposé entre le piston 22 et la douille 58, au contact avec une face d'épaulement avant 51 de la douille 58. La douille 58 est tubulaire et, pour permettre son coulissement, comporte un diamètre intérieur qui correspond à un diamètre de la partie avant 47 du plongeur 46. La partie arrière 49 du plongeur porte à son extrémité arrière le siège 50 annulaire arrière du clapet à trois voies.

En particulier, lorsque le servomoteur 10 est assemblé, la douille 58 traverse une lumière circulaire 61 qui est agencée dans une branche d'orientation sensiblement radiale de la clé 60. Les bords de la lumière 61 sont destinés à s'arc-bouter sur la douille 58 pour assurer son blocage.

La clé 60 est disposée dans un évidement 62 qui traverse le piston 22 perpendiculairement à son axe "A". Une partie supérieure 64 de branche radiale de la clé 60 est rappelée élastiquement à l'encontre d'une paroi arrière 66 de l'évidement 62 par l'intermédiaire d'un ressort 67 de compression qui est interposé entre une paroi transversale avant 68 de l'évidement 62 et une face avant de la partie supérieure 64 de la branche radiale de la clé 60.

Une partie inférieure 70 de branche radiale de la clé 60 est, en position de repos 22, en appui sur un support 72 qui est lié à l'enveloppe 12 du servomoteur 10. Une goupille transversale 71, qui traverse la douille 58 et le plongeur 46, est, en position de repos de la tige 38, en appui sur une face avant de la clé 60 pour définir la position de repos du plongeur 46.

De la sorte, lorsqu'un effort d'entrée est appliqué d'arrière en avant suivant une course extrême de la tige de commande 38, et notamment à une vitesse déterminée de celle-ci, la partie supérieure 64 de la clé 60 est entraînée par le piston 22 de commande tandis que sa partie inférieure 70 quitte son appui sur le support 72. De ce fait, la clé 60 bascule autour d'un axe globalement transversal et dans le sens anti-horaire pour coopérer avec la périphérie de la douille 58..

Tant que le mouvement de la tige de commande 38 se poursuit d'arrière en avant et que celle-ci entraîne avec elle la douille 58, l'effort appliqué sur la tige de commande 38 suffit à empêcher le blocage total de la douille 58, car il est plus élevé que l'effort exercé par le ressort 67 sur la clé 60.

En revanche, si le conducteur relâche prématurément son effort sur la tige 38, la douille 58 est bloquée par la clé 60 dans une position axiale avant extrême dans laquelle une portée annulaire 74 d'extrémité avant de la douille 58 bloque le palpeur 52 indépendamment du plongeur 46 et de la tige 38 de commande, ce qui permet de maintenir un effort de freinage maximal tant que le retour de la tige 38 de commande n'a pas provoqué la réouverture du clapet à trois voies 50, et ainsi, le retour du piston 22 d'avant en arrière.

Conformément à l'invention, l'embrayage unidirectionnel comporte des moyens élastomères d'amortissement qui sont interposés entre la face avant annulaire 59 de la partie arrière 49 du plongeur 46 et une face transversale en regard de la douille 58, pour permettre, une fois que l'effort d'entrée a été relâché et que les moyens de blocage ont déverrouillé la douille 58, un retour silencieux de la douille 58 vers sa position arrière de repos.

A cet effet, la face transversale de la douille 58 qui est agencée en regard de la face avant annulaire 59 de la partie arrière 49 du plongeur 46 est constituée d'une face arrière 76 annulaire de la douille 58.

Plus particulièrement, les moyens élastomères d'amortissement comportent un joint annulaire 78 qui est fixé sur la face avant annulaire 59 de la partie arrière 49 formant l'épaulement du plongeur 46.

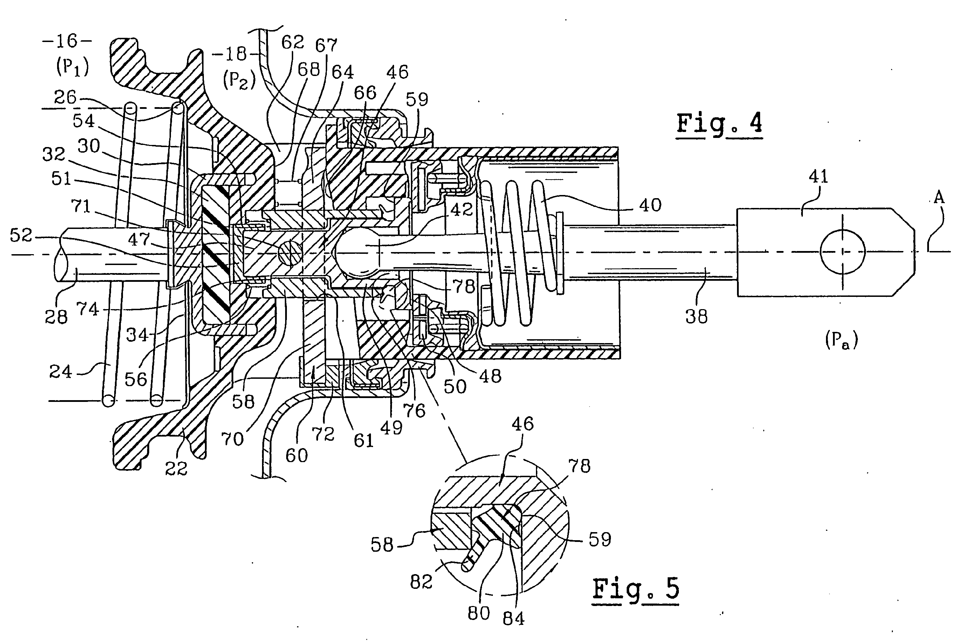

Comme l'illustre la figure 5, le joint annulaire 78 comporte au moins une partie annulaire arrière 80 et une partie tronconique avant 82 formant lèvre, de conicité orientée vers l'arrière, qui est destinée à freiner la douille 58 lors de son retour en position de repos avant qu'elle ne soit reçue en appui contre la partie annulaire arrière 80. Une face arrière 84 de la partie annulaire arrière 80. du joint est collée à la face avant annulaire 59 de la partie arrière 49 formant épaulement du plongeur 46.

Le fonctionnement des moyens élastomères d'amortissement est représenté dans le détail en référence aux figures 2 à 4.

Dans la configuration du servomoteur 10 qui a été représentée à la figure 2, celui ci fonctionne en position de surassistance, c'est à dire que la douille 58 a été actionnée vers l'avant par le plongeur 46 de manière que la palpeur 32 sollicite le disque de réaction 32, puis l'effort d'actionnement a été sensiblement relâché, et la clé 60 immobilise la douille 58. Dans cette configuration, la douille 58 ne sollicite pas le joint 78.

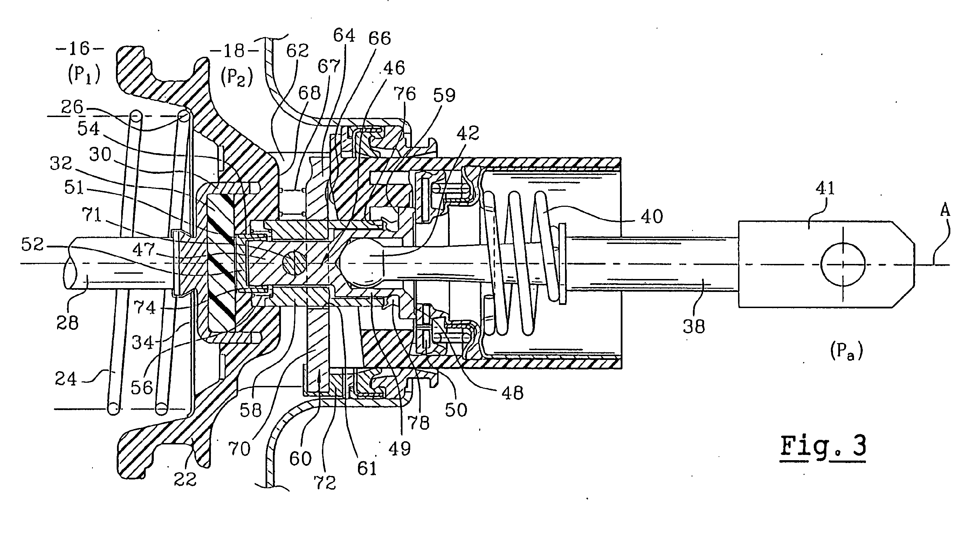

Puis, lorsque l'effort est relâché de manière à provoquer l'ouverture du clapet à trois voies 50 et le déblocage de la douille 58 comme représenté à la figure 3, la douille 58 revient en arrière et est reçue dans la partie tronconique avant 82 du joint 78 , ce qui permet de la freiner.

Enfin, lorsque la douille 58 est revenue dans sa position de repos comme représenté à la figure 4, sa face arrière annulaire est reçue en butée contre la partie annulaire arrière 80 du joint 78, ce qui permet de garantir un retour silencieux de la douille 58.

L'invention permet donc avantageusement de bénéficier d'un servomoteur qui permet d'appliquer un effort de freinage maximal dans des situations de freinage d'urgence et qui est doté d'une insonorisation efficace.

## Revendications

1. Servomoteur (10) pneumatique d'assistance au freinage pour un véhicule automobile, du type qui comporte une enveloppe (12) rigide à l'intérieur de laquelle est mobile une cloison (14) transversale délimitant de façon étanche une chambre avant (16), soumise à une première pression (P₁) de dépression moteur, et une chambre arrière (18) soumise à une deuxième pression (P₂) variant entre la dépression moteur et la pression atmosphérique (Pₐ), du type qui comporte un piston mobile (22) solidaire de la cloison mobile (14) se déplaçant avec la cloison mobile (14) et une tige (38) de commande se déplaçant dans le piston (22) sélectivement en fonction d'un effort axial d'entrée exercé vers l'avant à l'encontre d'un effort de rappel exercé sur la tige (38) par un ressort de rappel (40), du type dans lequel la tige (38) est mobile suivant une position d'actionnement intermédiaire ou une position d'actionnement extrême obtenue lorsque l'effort d'entrée est appliqué à une vitesse élevée déterminée, du type qui comporte un plongeur (46) qui est agencé à l'avant de la tige (38) de commande dans le piston (22) et un clapet à trois voies (50) qui comporte au moins un siège annulaire (48) arrière du plongeur (46) et qui est susceptible de faire varier la deuxième pression (P₂) régnant dans la chambre arrière (18), notamment en mettant en communication la chambre avant (16) et la chambre arrière (18) lorsque la tige (38) de commande est en position de repos ou en mettant progressivement la chambre arrière (18) en communication avec la pression atmosphérique (Pₐ) lorsque la tige (38) de commande est actionnée, du type dans lequel, dans la position extrême d'actionnement de la tige (38) de commande, un palpeur (52) monté coulissant à l'extrémité avant du plongeur (46) est sollicité par le plongeur (46) au contact d'un disque (32) de réaction solidaire du piston (22) mobile pour transmettre au plongeur (46) et à la tige (38) de commande l'effort de réaction du piston mobile (22), et du type qui comporte un dispositif d'embrayage unidirectionnel qui comporte une douille (58) coaxiale qui coulisse sur le plongeur (46), et des moyens de blocage axial qui sont susceptibles de la bloquer dans une position axiale avant extrême dans laquelle une portée annulaire (51) d'extrémité avant de la douille (58) bloque le palpeur (52) indépendamment du plongeur (46) et de la tige de commande (38),
**caractérisé en ce que** l'embrayage unidirectionnel comporte des moyens élastomères d'amortissement qui sont interposés entre une face intermédiaire transversale de butée du plongeur (46) et une face transversale en regard de la douille (58) pour permettre, une fois que l'effort d'entrée a été relâché et que les moyens de blocage ont déverrouillé la douille (58), un retour silencieux de la douille (58) vers sa position arrière de repos.

2. Servomoteur (10) pneumatique selon la revendication précédente, **caractérisé en ce que** la douille (58) est tubulaire, d'un diamètre intérieur correspondant à un diamètre d'une partie avant du plongeur (46), et **en ce que** la face transversale en regard de la douille est constituée de la face arrière (76) annulaire de la douille (58).

3. Servomoteur (10) selon la revendication précédente, **caractérisé en ce que** la face intermédiaire de butée du plongeur est constituée d'une face avant (59) annulaire transversale qui est portée par une partie arrière (49) du plongeur (46) formant épaulement, une face arrière de ladite partie arrière portant le siège (48) annulaire arrière du clapet (50).

4. Servomoteur (10) selon la revendication précédente, **caractérisé en ce que** les moyens élastomères d'amortissement comportent un joint annulaire (78) qui est fixé sur la face avant annulaire (59) de l'épaulement (49) du plongeur (46).

5. Servomoteur (10) selon la revendication précédente, **caractérisé en ce que** le joint annulaire (78) comporte au moins une partie annulaire arrière (80) et une partie tronconique avant (82) formant lèvre, de conicité orientée vers l'arrière, qui est destinée à freiner la douille (58) lors de son retour en position de repos avant qu'elle ne soit reçue en appui contre la partie annulaire arrière (80).

6. Servomoteur (10) selon l'une des revendications 4 ou 5, **caractérisé en ce qu'**une face arrière (84) de la partie annulaire du joint (78) est collée à la face avant annulaire (59) de l'épaulement (49) du plongeur (46).

7. Servomoteur (10) selon l'une quelconque des revendications précédentes, **caractérisé en ce que** les moyens de blocage axial de la douille (58) comportent une clé (60) sensiblement annulaire qui entoure avec jeu la douille (58) et qui est susceptible, lorsque l'effort d'entrée est appliqué à la vitesse déterminée, d'être entraînée par le piston (22) mobile pour basculer autour d'un axe globalement transversal pour coopérer avec la périphérie de la douille (58) et l'immobiliser.

8. Servomoteur (10) selon la revendication précédente, **caractérisé en ce que** la clé (60) comporte au moins une branche d'orientation sensiblement radiale qui est traversée par la douille (58) et qui porte des moyens de blocage destinés à - +coopérer avec la périphérie de la douille (58) pour son blocage.

9. Servomoteur (10) selon la revendication précédente, **caractérisée en ce que** ce que la clé (60) est montée dans un évidement (62) qui traverse le piston (22) perpendiculairement par rapport à son axe et dans lequel elle est susceptible de basculer dans sa position de blocage de la douille (58), et **en ce qu'**elle est rappelée élastiquement par un ressort (67) de compression agencé entre la paroi transversale avant (68) de l'évidement et une face avant d'une partie supérieure (64) de sa branche vers sa position de repos dans laquelle sa branche est en appui, dans sa partite supérieure (64), sur la paroi transversale arrière de l'évidement, et, dans sa partie inférieure (70) opposée, sur un support fixe (72) solidaire de l'enveloppe (12) du servomoteur (10).

## Claims

1. Pneumatic servomotor (10) for an assisted braking of a motor vehicle, of the type comprising a rigid casing (12), in which a transverse partition wall (14) is movable, thus defining in an airtight manner a front chamber (16) under a first engine negative pressure (P₁), and a rear chamber (18) under a second pressure (P₂), varying between the engine negative pressure and the atmospheric pressure (Pₐ) ; of the type including a moving piston (22), integral with the moving partition wall (14) and travelling with the latter, and a control rod (38), moving inside the piston (22), in a selective manner as a function of an axial input force, exerted in the forward direction against a return force applied to the rod (38) by a return spring (40) ; of the type according to which the control rod (38) is biased towards either an intermediate actuation position or an end actuation position, resulting from the applying of the input force at a determined high speed ; of the type comprising a plunger (46), arranged at the front part of the control rod (38) inside the piston (22), and a three-way valve (50), including at least an annular seat (48) borne by a rear section of the plunger (46), and capable of varying the second pressure (P₂), prevailing within the rear chamber (18), particularly by connecting the front chamber (16) with the rear chamber (18) when the control rod (38) is in the rest position, or by gradually connecting the rear chamber (18) with the atmospheric pressure (Pₐ) when the control rod (38) is actuated ; of the type in which, in the end actuation position of the control rod (38), a finger (52), which is slidingly fitted on the front end of the plunger (46), is biased by the plunger (46) into contact with a reaction disk (32), integral with the moving piston (22), so as to transmit the reaction force of the moving piston (22) to the plunger (46) and to the control rod (38) ; and of the type comprising a unidirectional clutch device, which includes a coaxial sleeve (58), sliding on the plunger (46), and axial-locking means, which are capable of locking said sleeve in an end front axial position, in which a front end annular bearing surface (51) of the sleeve (58) locks the finger (52), independently of the plunger (46) and of the control rod (38),
**characterised in that** the unidirectional clutch device comprises damping means, made of an elastomeric material and interposed between a stop-forming transverse intermediate face of the plunger (46) and an opposite transverse face of the sleeve (58), so as to permit, once the input force is released and when the locking means no longer lock the sleeve (58), the noiseless return of the sleeve (58) to its rear rest position.

2. Pneumatic servomotor (10) according to the preceding claim, **characterised in that** the sleeve (58) has a tubular shape, with an inner diameter corresponding to the diameter of a front section of the plunger (46), and **in that** the opposite transverse face of the sleeve is formed by the annular rear face (76) of the sleeve (58).

3. Servomotor (10) according to the preceding claim, **characterised in that** the stop-forming intermediate face of the plunger consists of a transverse annular front face (59), borne by a shoulder-forming rear section (49) of the plunger (46), whereas a rear face of said rear section bears the rear annular seat (48) of the valve (50).

4. Servomotor (10) according to the preceding claim, **characterised in that** the elastomeric damping means comprise a ring-type joint (78), which is fastened on the annular front face (59) of the shoulder-forming section (49) of the plunger (46).

5. Servomotor (10) according to the preceding claim, **characterised in that** the ring-type joint (78) comprises at least a rear annular section (80) and a lip-forming truncated-cone-shaped front section (82), the taper of which is directed backwards, and which is intended to decelerate the sleeve (58) in the course of its return to the rest position, before it actually bears against the rear annular section (80).

6. Servomotor (10) according to claim 4 or 5, **characterised in that** a rear face (84) of the annular section of the ring-type joint (78) is stuck to the annular front face (59) of the shoulder-forming section (49) of the plunger (46).

7. Servomotor (10) according to any one of the preceding claims, **characterised in that** the axial-locking means for the sleeve (58) comprise a substantially annular key (60), which surrounds the sleeve (58) with a given clearance and which is capable of being driven by the moving piston (22), when the input force is applied at the determined speed, so as to rock about a generally transverse axis, in such a way that it may cooperate with the periphery of the sleeve (58) and stop the latter.

8. Servomotor (10) according to the preceding claim, **characterised in that** the key (60) comprises at least one branch, which is substantially radially directed and traversed by the sleeve (58), and having locking means intended to cooperate with the periphery of the sleeve (58) so as to lock it.

9. Servomotor (10) according to the preceding claim, **characterised in that** the key (60) is received within a cavity (62), traversing the piston (22) perpendicularly to the axis of the latter, and in which it is capable of rocking to take its locking position for the sleeve (58), and **in that** the key is resiliently returned by a compression spring (67), arranged between the front transverse wall (68) of the cavity and a front face of an upper part (64) of its branch, so as to resume its rest position, in which its branch rests, by its upper part (64), on the rear transverse wall of the cavity while, in the opposite direction, the lower part (70) of the branch bears on a support (72) integral with the casing (12) of the servomotor (10).

## Patentansprüche

1. Pneumatischer Servomotor (10) zur Bremsunterstützung für ein Kraftfahrzeug, vom Typ, der ein starres Gehäuse (12) aufweist, in dem eine quer verlaufende Trennwand (14) beweglich ist, die in dichter Weise eine vordere Kammer (16), die einem ersten Druck (P₁), dem Motorunterdruck, ausgesetzt ist, und eine hintere Kammer (18) abgrenzt, die einem zweiten Druck (P₂) ausgesetzt ist, welcher zwischen dem Motorunterdruck und dem atmosphärischen Druck (Pₐ) schwankt, vom Typ, der einen mit der beweglichen Trennwand (14) fest verbundenen beweglichen Kolben (22), der sich mit der beweglichen Trennwand (14) verlagert, und eine Steuerstange (38) aufweist, die sich im Kolben (22) selektiv in Abhängigkeit von einer axialen Eingangskraft verlagert, welche nach vorne entgegen einer durch eine Rückstellfeder (40) auf die Stange (38) ausgeübten Rückstellkraft ausgeübt wird, vom Typ, bei dem die Stange (38) gemäß einer Betätigungszwischenstellung oder einer Betätigungsendstellung beweglich ist, welche erreicht ist, wenn die Eingangskraft mit einer vorbestimmten hohen Geschwindigkeit aufgebracht wird, vom Typ, der einen Tauchkolben (46), der am vorderen Teil der Steuerstange (38) im Kolben (22) angeordnet ist, und ein Dreiwegeventil (50) aufweist, das mindestens einen ringförmigen, hinteren Sitz (48) des Tauchkolbens (46) umfasst und den zweiten, in der hinteren Kammer (18) herrschenden Druck (P₂) variieren kann, indem insbesondere die vordere Kammer (16) und die hintere Kammer (18) verbunden werden, wenn sich die Steuerstange (38) in der Ruhestellung befindet, oder indem die hintere Kammer (18) allmählich mit dem atmosphärischen Druck (Pₐ) verbunden wird, wenn die Steuerstange (38) betätigt wird, vom Typ, bei dem in der Betätigungsendstellung der Steuerstange (38) ein Taster (52), der am vorderen Ende des Tauchkolbens (46) gleitend angebracht ist, vom Tauchkolben (46) so beaufschlagt wird, dass er eine mit dem beweglichen Kolben (22) fest verbundene Reaktionsscheibe (32) berührt, um dem Tauchkolben (46) und der Steuerstange (38) die Reaktionskraft des beweglichen Kolbens (22) zu übertragen, und vom Typ, der eine in eine Richtung wirkende Kupplungsvorrichtung aufweist, die eine koaxiale, auf dem Tauchkolben (46) gleitende Hülse (58) und Mittel zur axialen Blockierung aufweist, die diese in einer axialen vorderen Endstellung blockieren können, in der eine ringförmige, vordere Endauflagefläche (51) der Hülse (58) den Taster (52) unabhängig vom Tauchkolben (46) und der Steuerstange (38) blockiert,
**dadurch gekennzeichnet, dass** die in eine Richtung wirkende Kupplungsvorrichtung Dämpfungsmittel aus Elastomer aufweist, die zwischen einer quer verlaufenden Anschlagzwischenfläche des Tauchkolbens (46) und einer gegenüberliegenden Querfläche der Hülse (58) angeordnet sind, um ein geräuschloses Zurückstellen der Hülse (58) in ihre hintere Ruhestellung zu ermöglichen, sobald die Eingangskraft gelöst wurde und die Blockierungsmittel die Hülse (58) entriegelt haben.

2. Pneumatischer Servomotor (10) nach dem vorhergehenden Anspruch, **dadurch gekennzeichnet, dass** die Hülse (58) rohrförmig ist und einen Innendurchmesser aufweist, der einem Durchmesser eines vorderen Abschnitts des Tauchkolbens (46) entspricht, und dass die gegenüberliegende Querfläche der Hülse durch die ringförmige hintere Fläche (76) der Hülse (58) gebildet ist.

3. Servomotor (10) nach dem vorhergehenden Anspruch, **dadurch gekennzeichnet, dass** die Anschlagzwischenfläche des Tauchkolbens durch eine ringförmige vordere Querfläche (59) gebildet ist, die von einem hinteren, einen Absatz bildenden Abschnitt (49) des Tauchkolbens (46) getragen ist, wobei eine hintere Fläche des hinteren Abschnitts den ringförmigen, hinteren Sitz (48) des Ventilelements (50) trägt.

4. Servomotor (10) nach dem vorhergehenden Anspruch, **dadurch gekennzeichnet, dass** die Dämpfungsmittel aus Elastomer eine ringförmige Dichtung (78) aufweisen, die an der ringförmigen vorderen Fläche (59) des Absatzes (49) des Tauchkolbens (46) befestigt ist.

5. Servomotor (10) nach dem vorhergehenden Anspruch, **dadurch gekennzeichnet, dass** die ringförmige Dichtung (78) mindestens einen ringförmigen, hinteren Abschnitt (80) und einen kegelstumpfartigen, vorderen Abschnitt (82) aufweist, welcher eine Lippe bildet, deren Kegelform nach hinten gerichtet ist und die dazu bestimmt ist, die Hülse (58) bei ihrer Rückstellung in die Ruhestellung zu bremsen, bevor sie in Anlage an den ringförmigen, hinteren Abschnitt (80) aufgenommen wird.

6. Servomotor (10) nach Anspruch 4 oder 5, **dadurch gekennzeichnet, dass** eine hintere Fläche (84) des ringförmigen Abschnitts der Dichtung (78) an die ringförmige vordere Fläche (59) des Absatzes (49) des Tauchkolbens (46) geklebt ist.

7. Servomotor (10) nach einem der vorhergehenden Ansprüche, **dadurch gekennzeichnet, dass** die Mittel zur axialen Blockierung der Hülse (58) einen im Wesentlichen ringförmigen Schlüssel (60) aufweisen, der die Hülse (58) mit Spiel umgibt und von dem beweglichen Kolben (22) mitgenommen werden kann, wenn die Eingangskraft mit der vorbestimmten Geschwindigkeit aufgebracht wird, so dass er um eine insgesamt quer verlaufende Achse kippt, um mit dem Umfang der Hülse (58) zusammenzuwirken und diese festzustellen.

8. Servomotor (10) nach dem vorhergehenden Anspruch, **dadurch gekennzeichnet, dass** der Schlüssel (60) mindestens einen im Wesentlichen radial ausgerichteten Schenkel aufweist, den die Hülse (58) durchquert und der Blockierungsmittel trägt, die dazu bestimmt sind, mit dem Umfang der Hülse (58) zusammenzuwirken, um diese zu blockieren.

9. Servomotor (10) nach dem vorhergehenden Anspruch, **dadurch gekennzeichnet, dass** der Schlüssel (60) in einer Aussparung (62) angebracht ist, die den Kolben (22) bezüglich seiner Achse senkrecht durchquert und in der der Schlüssel in seine Stellung zur Blockierung der Hülse (58) kippen kann, und dass der Schlüssel von einer Druckfeder (67), die zwischen der vorderen Querwand (68) der Aussparung und einer vorderen Fläche eines oberen Abschnitts (64) seines Schenkels angeordnet ist, elastisch in seine Ruhestellung zurückgestellt wird, in welcher sein Schenkel in seinem oberen Abschnitt (64) an der hinteren Querwand der Aussparung und in seinem entgegengesetzten unteren Abschnitt (70) an einem feststehenden Träger (72) anliegt, der mit dem Gehäuse (12) des Servomotors (10) fest verbunden ist.
